# EUROPÄISCHE PATENTSCHRIFT

(11) **EP 2 559 545 B1**
(45) Veröffentlichungstag und Bekanntmachung des Hinweises auf die Patenterteilung: **16.09.2015**
(21) Anmeldenummer: 12179851.6
(22) Anmeldetag: 09.08.2012
(51) Int. Cl.: B29C 49/48, B29C 49/56

(54) **Vorrichtung sowie Verfahren zum Blasformen von Kunststoffvorformlingen zu Kunststoffbehältnissen mit Druckkissen**
Device for and method of blow moulding plastic preforms into plastic containers with pressure pads
Dispositif et procédé moulage par soufflage d'ébauches en plastique en conteneurs en plastique doté d'un coussin de pression

(30) Priorität: 19.08.2011 DE 102011052865
(43) Veröffentlichungstag der Anmeldung: 20.02.2013
(73) Patentinhaber: Krones AG, 93073 Neutraubling (DE)
(72) Erfinder: Höllriegl, Thomas, 93158 Teublitz (DE); Deyerl, Heinrich, 92552 Teunz (DE); Geltinger, Florian, 93093 Donaustauf (DE); Schuster, Gerhard, 93101 Pfakofen (DE); Philipp, Thomas, 93161 Sinzing-Eilsbrunn (DE)
(74) Vertreter: Bittner, Bernhard

(56) Entgegenhaltungen:
- WO-A1-2011/026805
- DE-T2- 60 113 860
- DE-U1-202004 011 785

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. So ist es beispielsweise bekannt, dass Blasformen bzw. Blasformteile an Trägern angeordnet werden und diese Träger auseinander und zusammengeklappt werden können, wobei in einem geschlossenen Zustand der Blasform Kunststoffvorformlinge im Inneren dieser Blasform, insbesondere durch Beaufschlagung mit Druckluft zu Kunststoffbehältnissen expandiert werden.

In der Regel sind dabei zwei Formträgerschalen vorgesehen, an denen jeweils fest die Blasformteile angeordnet sind. Diese Formträgerschalen sind wiederum an einem Blasformträger bzw. einem Blasformträgerteil angeordnet. Dabei ist es auch bekannt, dass zwischen diesem Blasformträger und der Formträgerschale auf einer Druckkissenseite beispielsweise eine dreidimensionale ausgeprägte Dichtung angeordnet sein kann, welche die halbschalige Formträgerschale in ihrem äußeren Radius umschlingt. Diese Dichtung bildet dabei einen Hohlraum aus, der während des Blasvorgangs mit Druckluft beaufschlagt werden kann. Durch diese Beaufschlagung mit Druckluft werden während des eigentlichen Umformungsvorgangs die beiden Blasformteile aneinander gedrückt und auf diese Weise können Ungenauigkeiten des so entstehenden Behältnisses insbesondere an den Übergängen der beiden Blasformteile vermieden werden.

Befestigungen für die Formträgerschale an dem Blasformträger werden dabei üblicherweise außerhalb des oben genanntes Dichtungsfensters angebracht. Diese Stellen an dem Formträger und auch an der Formträgerschale werden jedoch durch den Blasformprozess stark beeinflusst, sodass hier größere Verformungen während des Blasprozesses auftreten können.

Aus der Druckschrift DE 601 13 860 T2 ist eine Vorrichtung zum Umformen von Vorformlingen zu Behältnissen mit einer Blasform bekannt. Dabei sind zwei Blasformteile und zwei Blasformträgerteile vorhanden. Eine Art Druckkissen bzw. Ausgleichskammer ist vorgesehen, welche/-s mit einem Druckmittel beaufschlagbar ist, um das Blasformträgerteil und das daran angeordnete Blasformteil 30 auseinanderzudrängen.

Der Erfindung liegt die Aufgabe zugrunde, den ständig steigenden Qualitätsansprüchen an PET-Flaschen gerecht zu werden, und durch den besagten Blasvorgang höherwertige Produkte zu erzeugen. Insbesondere an dem Übergangsbereich, der durch das Aufeinandertreffen der beiden Blasformteile bedingt ist, soll eine höhere Qualität des entstandenen Kunststoffbehältnisses durch eine im Vergleich zum Stand der Technik gleichmäßigere Kraftübertragung von zwischen den beiden Blasformteilen und den beiden Formträgerschalen befindlichen Druckkissen auf die Biesformteile bzw. Blasformträgerteile erreicht werden. Auch soll eine Möglichkeit geschaffen werden, um die Stabilität im Formträger und der Formträgerschale während des Blasprozesses zu erhöhen.

Diese Aufgaben werden erfindungsgemäß durch die Gegenstände der unabhängigen Ansprüche erreicht.

Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Blasform auf, welche wenigstens zwei bezüglich einander beweglich angeordnete Blasformteile aufweist, welche in einem geschlossenen Zustand der Blasform einen Hohlraum ausbilden, in dessen Inneren die Kunststoffvorformlinge durch Beaufschlagung mit einem fließfähigen Medium (und insbesondere einem gasförmigen Medium und insbesondere Luft) zu den Kunststoffbehältnissen expandierbar sind, wobei das erste Blasformteil an einem ersten Blasformträgerteil angeordnet ist und das zweite Blasformteil an einem zweiten Blasformträgerteil angeordnet ist und das erste Blasformträgerteil gegenüber dem zweiten Blasformträgerteil zum Öffnen und Schließen der Blasform bewegbar ist.

Weiterhin ist zwischen wenigstens einem Blasformträgerteil und dem an diesem Blasformträgerteil angeordneten Blasformteil eine Druckkissenanordnung angeordnet, wobei eine Druckkammer bzw. eine Druckkisseneinrichtung dieser Druckkissenanordnung mit einem fließfähigen Druckmittel beaufschlagbar ist, um durch eine zwischen dem Blasformträgerteil und dem Blasformteil wirkende Kraft das wenigstens eine Blasformträgerteil und das an diesem angeordnete Blasformteil auseinander zu drängen.

Erfindungsgemäß ist die Druckkissenanordnung derart ausgebildet, dass die zwischen dem Blasformträgerteil und dem Blasformteil wirkende Kraft eine erste Teilkraft aufweist, die in einem ersten vorgegebenen - und bevorzugt räumlich definierbaren bzw. abgrenzbaren - Bereich in der Umfangsrichtung des Blasformteils wirkt, so wie eine zweite Teilkraft, die in einem zweiten vorgegebenen Bereich in der Umfangsrichtung des Blasformteils wirkt, wobei der ersten Bereich und der zweite Bereich voneinander beabstandet sind und die Richtungen der ersten Teilkraft und der zweiten Teilkraft in einem vom 0 Grad unterschiedlichen Winkel zueinander verlaufen. Die vorgegebenen Bereiche, in denen die Teilkräfte wirken, ergeben sich daher bevorzugt aus einer insbesondere geometrischen Gestalt der Druckkissenanordnung.

Unter der Anordnung es Blasformteils an dem Blasformträgerteil wird verstanden, dass dieses Blasformteil zumindest mittelbar, d. h. ggfs. für weitere Elemente an dem Blasformträgerteil angeordnet ist. Üblicherweise ist das Blasformteil wiederum an einer Trägerschale angeordnet und diese Trägerschale ist bevorzugt an dem Blasformträgerteil angeordnet, wobei die erwähnte Druckkissenanordnung zwischen dem Blasformträgerteil und der besagten Trägerschale ausgebildet ist. Im Stand der Technik ist üblicherweise zwischen dem Blasformträgerteil und dem Blasformteil lediglich ein einheitliches Druckkissen angeordnet, welches mit Druckluft beaufschlagt werden kann. Entsprechend wirkt eine resultierende Kraft bei Beaufschlagung des Druckkissens nur in eine Richtung, sodass in dieser resultierenden Richtung die Blasform und der Blasformträger auseinandergedrückt werden. Durch diese lediglich eine Kraftwirkung kann es dabei während des Blasvorgangs zu Verspannungen kommen, die sich letztendlich auf die Gestalt des so entstehenden Kunststoffbehältnisses auswirken. Beim dem fließfähigen Medium, mit dem das Druckkissen beaufschlagt wird, handelt es sich insbesondere um ein gasförmiges Medium, bevorzugt um Luft und ggfs. um Sterilluft.

Durch die erfindungsgemäß vorgeschlagene Vorgehensweise wird die Lage und Ausführung des Druckkissens so gestaltet, dass die Verformung im Formträger und in der (Form)trägerschale reduziert wird. Genauer werden die durch das Druckkissen aufgebrachten Kräfte in wenigstens zwei Komponenten aufgeteilt, die unter unterschiedlichen Winkeln auf die Trägerschale bzw. die Blasform wirken, um damit das Risiko von Verspannungen während des Expansionsvorgangs reduzieren. Bei einer vorteilhaften Ausführungsform sind die beiden Teilkräfte unabhängig voneinander und besonders bevorzugt auch - insbesondere hinsichtlich ihrer Größen - unabhängig voneinander einstellbar.

Vorzugsweise wirkt in der Umfangsrichtung zwischen den beiden Bereichen wenigstens abschnittsweise keine Kraft (abgesehen von einer sich aus den Teilkräften vekotriell zusammensetzenden Kraft) oder nur eine gegenüber den Teilkräften erheblich geringere Kraft, welche das Blasformteil und das Blasformträgerteil auseinanderdrängt.

Bei einer vorteilhaften Ausführungsform weist die Vorrichtung zum Umformen von Kunststoffvorformlingen auch eine Beaufschlagungseinrichtung auf, welche die Kunststoffvorformlinge während des Expansionsvorgangs mit einem gasförmigen Medium und insbesondere mit Druckluft beaufschlagt, um diese zu expandieren.

Weiterhin weist die Vorrichtung bevorzugt auch eine Reckstange auf, welche die Kunststoffvorformlinge während des Expansionsvorgangs in deren Längsrichtung dehnt.

Bei einer weiteren vorteilhaften Ausführungsform ist auch eine Verriegelungseinrichtung vorgesehen, welche die Formträgerteile insbesondere während des Expansionsvorgangs miteinander verriegelt. Diese Verriegelung kann dabei kurvengesteuert eingreifen und derart ausgestaltet sein, dass zu Beginn des Expansionsvorgangs und auch im Verlauf des Expansionsvorgangs die beiden Formträgerteile miteinander verriegelt sind. Wie erwähnt, erlaubt die Ausgestaltung mit den zwei Teilkräften ein gleichmäßigeres Andrücken der beiden Blasformteile aneinander.

Bei einer weiteren vorteilhaften Ausführungsform weist die Vorrichtung lediglich eine derartige Druckkissenanordnung an einem der beiden Formträger auf.

Bei einer weiteren vorteilhaften Ausführungsform ist der Winkel zwischen der Richtung der ersten Teilkraft und der Richtung der zweiten Teilkraft zwischen 10° und 170°, bevorzugt zwischen 20° und 160°, bevorzugt zwischen 30° und 150°, bevorzugt zwischen 45° und 135°, bevorzugt zwischen 60° und 120° und besonders bevorzugt zwischen 75° und 105°. Diese Ausgestaltungen der Kraftrichtungen erlauben in besonders vorteilhafter Weise ein günstiges Andrücken der beiden Blasformteile aneinander. Damit ist insbesondere das Druckkissen in einer V-Anordnung angeordnet, sodass die beiden Kräfte in dem besagten Winkel zueinander stehen. Bei einer vorteilhaften Ausführungsform ist die Trägerschale über eine formschlüssige Halterung an dem Blasformträgerteil gehalten, sodass auch eine feste Lage des genannten Druckkissens erreicht wird.

So wäre es möglich, dass wenigstens eines der und bevorzugt die beiden Blasformträgerteile eine V-förmige Ausgestaltung zumindest an der den Blasformträgerschalen bzw. den Blasformen zugewandten Seite aufweisen. Auch wäre es möglich, dass nur eines der Blasformträgerteile die besagte V- förmige Ausgestaltung aufweist und das andere Blasformträgerteil eine andersartige Ausgestaltung, beispielsweise eine (kreis)runde Ausgestaltung oder eine ovale Ausgestaltung (und allgemeiner eine wenigstens abschnittsweise gekrümmte Ausgestaltung. Damit weist hier der Aufnahmebereich eines Blasformträgerteils zum Aufnehmen der Blasform eine andere Gestalt auf als der Aufnahmebereich des anderen Blasformträgerteils. Insbesondere weist dabei dasjenige Blasformträgerteil, an dem auch ein bzw. das Druckkissen angeordnet ist, die V-förmige Ausgestaltung auf.

Unter einer V-förmigen Gestaltung wird dabei sowohl eine V-Form im engeren Sinne verstanden, welche lediglich zwei gegenüber einander abgewinkelte Schenkel aufweist, als auch eine Form, bei der diese abgewinkelten Schenkel über wenigstens und bevorzugt genau einen weiteren Abschnitt miteinander verbunden sind, etwa einen Abschnitt, der senkrecht zu einer zwischen den beiden Schenkeln verlaufenden Winkelhalbierenden steht.

Auch können die Blasformteile selbst an der den Blasformträgerteilen zugewandten Seite eine gekrümmte (beispielsweise kreisrunde) Ausgestaltung aufweisen oder eine V-förmige Ausgestaltung. Auch wäre es denkbar, dass eines der beiden Blasformteile eine V-förmige Ausgestaltung aufweist und das andere eine gekrümmte bzw. runde Ausgestaltung. Unter der kreisförmigen bzw. V-förmigen Ausgestaltung wird dabei insbesondere eine geometrische Gestalt in einer Ebene, welche senkrecht zu einer Längsrichtung der Blasform ist, verstanden

Daneben wäre es auch möglich, dass ein Blasformteil direkt von dem Blasformträgerteil aufgenommen wird, also ohne Vorsehen einer Blasformträgerschale. Dabei könnte das betreffende Blasformteil direkt in Kontakt mit dem Blasformträgerteil stehen, oder aber zwischen dem Blasformteil und dem Blasformträgerteil ein Druckkissen angeordnet sein.

Bei einer weiteren vorteilhaften Ausführungsform weist die Druckkissenanordnung eine erste Druckkisseneinrichtung und eine zweite Druckkisseneinrichtung auf, welche wenigstens teilweise bzw. abschnittsweise voneinander getrennt sind und bevorzugt vollständig voneinander getrennt sind. Durch diese besagten Druckkisseneinrichtungen können die oben erwähnten beiden Kräfte ggfs. auch unabhängig voneinander auf die Blasform bzw. die Trägerschale aufgebracht werden. Es wäre jedoch auch möglich, dass lediglich eine Druckkisseneinrichtung vorgesehen ist, diese aber derart gestaltet wird, dass die beiden oben erwähnten Kräfte entstehen. Dies kann beispielsweise durch einen Steg innerhalb einer einzelnen Druckkisseneinrichtung erreicht werden, der dafür sorgt, dass in Umfangsrichtung der Blasform in einem zentralen Bereich zwischen den beiden erwähnten Teilkräften keine oder nur geringe Kräfte ausgeübt werden.

Unter einer wenigstens teilweisen Trennung der Druckkisseneinrichtungen wird insbesondere verstanden, dass diese Druckkisseneinrichtungen zwar über einen Verbindungsabschnitt miteinander verbunden sein können, sich jedoch dieser Verbindungsabschnitt nicht entlang eines gesamten Seitenrandes wenigstens einer Druckkisseneinrichtung erstreckt sondern lediglich entlang eines Abschnitts eines derartigen Seitenrandes, der bevorzugt kleiner ist als 50% des Seitenrandes, bevorzugt kleiner als 30% des Seitenrandes, bevorzugt kleiner als 20% des Seitenrandes.

Mit anderen Worten sind bei einer abschnittsweisen Trennung die Druckkisseneinrichtungen vorteilhaft lediglich über einen Verbindungsabschnitt miteinander verbunden, der sich auf weniger als 20% des Umfangs wenigstens einer der beiden Druckkisseneinrichtungen erstreckt, bevorzugt auf weniger als 10% des Umfangs, bevorzugt auf weniger als 5% des Umfangs.

Bei einer weiteren vorteilhaften Ausführungsform weist die Vorrichtung eine erste Zuführungseinrichtung auf, um der ersten Druckkisseneinrichtung das fließfähige Medium zuzuführen, so wie eine hiervon getrennte zweite Zuführungseinrichtung, um der zweiten Druckkisseneinrichtung das fließfähige Medium zuzuführen. Auf diese Weise ist eine unterschiedliche Steuerung der beiden Druckkisseneinrichtungen möglich. Auch können die Zuführungskanäle für die beiden Druckkisseneinrichtungen vollständig voneinander getrennt sein, es wäre jedoch auch möglich, dass den beiden Druckkisseneinrichtungen über einen gemeinsamen Anschluss das fließfähige Medium, d. h. die Druckluft zugeführt wird.

Bei einer weiteren vorteilhaften Ausführungsform weist die Druckkissenanordnung eine umlaufende Dichtungseinrichtung auf, welche den mit dem fließfähigen Druckmittel beaufschlagten Raum, d. h. die Druckkammer, abgrenzt, und diese Dichtungseinrichtung liegt an einem ebenen Wandbereich an. Im Stand der Technik werden üblicherweise dreidimensional anliegende Dichtungseinrichtungen verwendet, d. h. insbesondere Dichtungseinrichtunge, welche sich auch entlang eines gekrümmten Abschnitts der Trägerschale bzw. der Blasform oder Blasformträgers erstrecken. In dieser Ausführungsform wird vorgeschlagen, dass sich die Dichtungseinrichtung lediglich entlang einer Ebene d. h. einer geraden Ebene und damit nur im zweidimensionalen Bereich erstreckt. Auf diese Weise ist eine verbesserte Dichtwirkung möglich.

Bei einer weiteren vorteilhaften Ausführungsform ist die Druckkissenanordnung zwischen dem Blasformträgerteil und einer das Blasformteil haltenden Trägerschale angeordnet. Diese Trägerschale kann dabei derart ausgestaltet sein, dass das Blasformteil lösbar von dieser Trägerschale ausgestaltet ist.

Bei einer weiteren vorteilhaften Ausführungsform weist die Vorrichtung eine Halteeinrichtung zum Halten des Blasformteils an dem Blasformträgerteil auf, und diese Halteeinrichtung ist in einer Umfangsrichtung der Blasform zwischen Bereichen der Druckkissenanordnung angeordnet. Bei dieser Ausführungsform wird vorgeschlagen, dass eine bezüglich der Druckkissenanordnung bevorzugt zentrale Anordnung der Halteeinrichtung vorgesehen ist, welche beispielsweise, falls nur eine Druckkisseneinrichtung vorgesehen ist, an einem entsprechenden begrenzenden Steg vorgesehen sein kann.

Bevorzugt ist jedoch die Halteeinrichtung zwischen der ersten Druckkisseneinrichtung und der zweiten Druckkisseneinrichtung angeordnet. Bevorzugt wird in einem Bereich dieser Halteeinrichtung durch das Druckkissen selbst keine Kraft in Richtung der Blasform ausgeübt.

Die vorliegende Erfindung ist weiterhin auf ein Verfahren zum Umformen von Kunststoffvorformlingen zu Kunststoffbehältnissen gerichtet, wobei eine Blasform vorgesehen ist, welche zwei bezüglich einander beweglich angeordnete Blasformteile aufweist, welche in einem geschlossenen Zustand der Blasform einen Hohlraum ausbilden, in dessen Inneren die Kunststoffvorformlinge durch Beaufschlagung mit einem fließfähigen Medium und insbesondere mit Druckluft zu den Kunststoffbehältnissen expandiert werden.

Dabei ist das erste Blasformteil an einem ersten Blasformträgerteil angeordnet und das zweite Blasformteil an einem zweiten Blasformträgerteil. Das erste Blasformträgerteil wird gegenüber dem zweiten Blasformträgerteil zum Öffnen und Schließen der Blasform bewegt. Weiterhin ist zwischen wenigstens einem Blasformträgerteil an dem an diesem Blasformträgerteil (zumindest mittelbar) angeordneten Blasformteil eine Druckkissenanordnung angeordnet, wobei eine Druckkammer bzw. eine Druckeinrichtung dieser Druckkissenanordnung mit einem fließfähigen Druckmittel beaufschlagt wird, um durch eine zwischen dem Blasformträgerteil und dem Blaformteil wirkende Kraft das wenigstens eine Blasformträgerteil und das an diesem angeordnete Blasformteil auseinander zu drängen.

Erfindungsgemäß ist die Druckkissenanordnung derart ausgebildet, dass die zwischen dem Blasformträgerteil und dem Blasformteil wirkende Kraft eine erste Teilkraft aufweist, die in einem ersten vorgegebenen Bereich in der Umfangsrichtung des Blasformteils wirkt, so wie eine zweite Teilkraft, die in einem zweiten vorgegebenen Bereich in der Umfangsrichtung des Blasformteils wirkt, wobei der erste Bereich und der zweite Bereich voneinander beabstandet sind und die Richtungen der ersten Teilkraft und der zweiten Teilkraft in einem von 0 Grad unterschiedlichem Winkel zueinander verlaufen.

Es wird daher auch verfahrensmäßig vorgeschlagen, dass die Druckkissenanordnung so ausgeführt wird, dass wenigstens zwei Teilkräfte vorgesehen sind, welche auf das Blasformteil bzw. eine das Blasformteil haltende Trägerschale wirken.

Bei einem bevorzugten Verfahren wirkt eine zwischen dem Blasformteil und dem Blasformträgerteil wirkende Haltekraft in der Umfangsrichtung der Blasform zwischen der ersten Teilkraft und der zweiten Teilkraft.

Weitere Vorteile und Ausführungsformen ergeben sich aus den beigefügten Zeichnungen. Darin zeigen:
- Fig. 1: eine Behandlungsanlage für Behältnisse nach dem Stand der Technik;
- Fig. 2: eine Darstellung einer Blasstation nach dem Stand der Technik;
- Fig. 3a, b: zwei schematische Darstellungen zur Veranschaulichung der Erfindung;
- Fig. 4: eine erfindungsgemäße Blasstation zum Umformen von Kunststoffvorformlingen zu Kunststoffbehältnissen;
- Fig. 5: eine teilweise Ansicht einer Blasstation zum Umformen von Kunststoffvorformlingen zu Kunststoffbehältnissen;
- Fig. 6: eine Darstellung einer Trägerschale zum Tragen von Blasformen;
- Fig. 7: eine Darstellung eines erfindungsgemäßen Blasformträgerteils;
- Fig. 8: eine Draufsicht auf das in Fig. 7 gezeigte Blasformträgerteil; und
- Fig. 9: eine weitere Ansicht eines erfindungsgemäßen Blasformträgerteils.

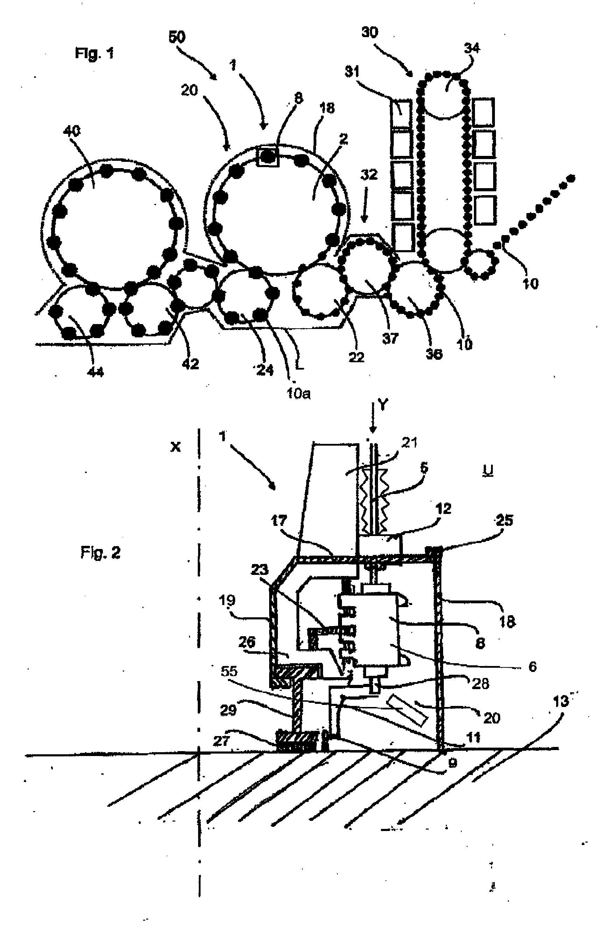

Figur 1 zeigt eine schematische Darstellung einer Anlage zum Herstellen von Kunststoffbehältnissen nach dem Stand der Technik. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

Die in den Figuren 1 und 2 gezeigte Anordnung bezieht sich auf eine sterile Blasformanordnung. Die vorliegende Erfindung ist jedoch ebenso bei herkömmlichen bzw. unsterilen Blasformmaschinen anwendbar. Auch das in Figur 1 gezeigte Anlagenkonzept ist sowohl für sterile als auch für nicht sterile Maschinen anwendbar.

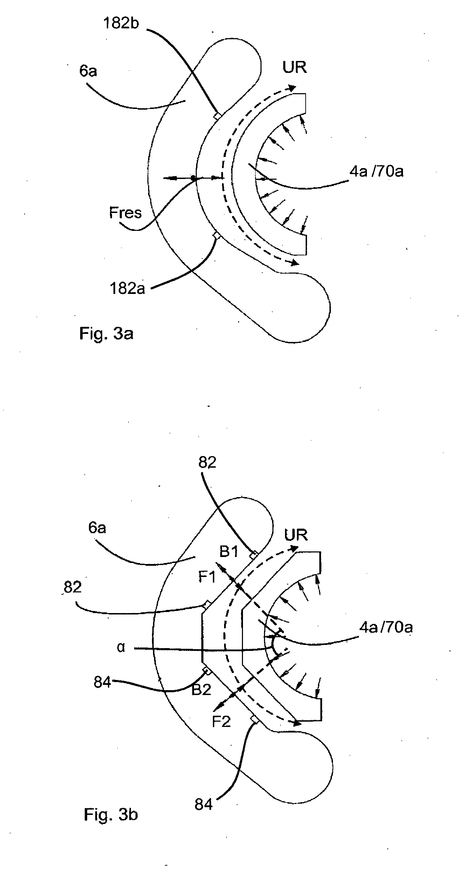

Die Fig. 3a und 3b zeigen zwei schematische Darstellungen zur Veranschaulichung des der Erfindung zugrundeliegenden Problems und dessen Lösung. Fig. 3a zeigt die Verhältnisse nach dem Stand der Technik Dabei ist hier ein Blasformträgerteil 6a vorgesehen, an dem eine Blasform 4a (ggfs. über eine Trägerschale) angeordnet ist. Es wäre jedoch auch denkbar, die Blasformen direkt an dem Träger zu befestigen. Zwischen dem Blasformträger 6a und der Blasform 4a ist ein in der Umfangsrichtung UR vorgesehenes Druckkissen angeordnet, welches zwischen den beiden Dichtungsabschnitten 182a und 182b ausgebildet ist. Dieses Druckkissen erzeugt damit eine resultierende Kraft Fres, die hier horizontal wirkt. Die kleinen Kraftpfeile im Inneren der Blasformen beziehen sich auf die Kräfte, welche durch den eigentlichen Blasvorgang entstehen. Dies bedeutet, dass es auf diese Weise zu Verspannungen und auch zu Verformungen der Blasform oder auch der Blasformträgerschale kommen kann.

Fig. 3b zeigt eine erfindungsgemäße Ausgestaltung. Im Gegensatz zum Stand der Technik sind hier zwei durch die umlaufenden Dichtungen 82, 84 voneinander beabstandete Druckkissen vorgesehen, die hier Teilkräfte F1 und F2, die in dem vorgegebenen Winkel zueinander angeordnet sind, auf die Blasform 4a bzw. die Trägerschale für die Blasform ausüben. Die Bezugszeichen 82, 84 kennzeichnen damit Dichtungseinrichtungen, welche die beiden Druckkissen umgeben bzw. ausbilden. Durch die Wirkung mit zwei Teilkräften F1 und F2 kann eine insgesamt gleichmäßigere Kraftwirkung auf die Blasform 4a bzw. die Trägerschale ausgeübt werden. Diese beiden Bereiche B1 und B2 in denen die Teilkräfte wirken, sind hier in der Umfangsrichtung UR der Blasform voneinander beabstandet. Der Winkel α, unter dem die beiden Kräfte F1 und F2 zueinander verlaufen, liegt vorteilhaft in einem Bereich zwischen 70° und 110°.

Die Umfangsrichtung ist vorteilhaft auch eine Umfangsrichtung des zu expandierenden Kunststoffvorformlings bzw. Behältnisses. Der erwähnte Winkel α wird vorteilhaft in einer durch die Umfangsrichtung gebildeten Ebene gebildet. Diese Ebene steht dabei vorteilhaft zu einer Längsrichtung des Kunststoffvorformlings senkrecht und ist vorteilhaft parallel zu der Figurenebene von Fig. 3b

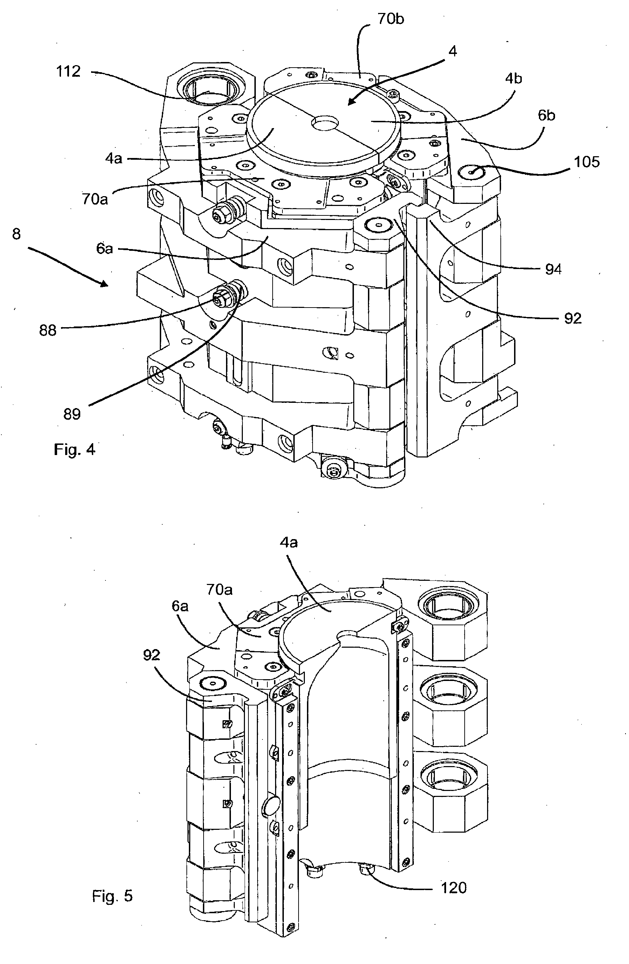

Fig. 4 zeigt eine perspektivische Darstellung einer erfindungsgemäßen Blasstation 8. Diese Blasstation 8 weist dabei zwei Blasformteile 4a, 4b auf, die hier in einem geschlossenen Zustand dargestellt sind. Zwischen diesen beiden Blasformteilen 4a, 4b wird der oben erwähnte Hohlraum ausgebildet, innerhalb dessen die Kunststoffvorformlinge zu den Kunststoffbehältnissen expandiert werden.

Das Blasformteil 4a und entsprechend auch das Blasformteil 4b sind hier an Blasformträgerschalenteilen 70a, 70b fest angeordnet, beispielsweise verklemmt oder verschraubt. Diese Blasformträgerschalen 70a, 70b sind wiederum sind wiederum an Blasformträgerteilen 6a und 6b angeordnet. Diese Blasformträgerteile sind bezüglich einer gemeinsamen Schwenklagerung 112 schwenkbar, um die Blasform zu öffnen und zu schließen.

Das Bezugszeichen 92 bezieht sich auf ein erstes Verriegelungselement, in welches ein zweites Verriegelungselement 94 zum Verriegeln der Blasform während des Expansionsvorgangs eingreift. Zu diesem Zweck ist dieses zweite Verriegelungselement 94 bezüglich einer Schwenkwelle 105 schwenkbar.

Das Bezugszeichen 88 bezieht sich auf Befestigungsmittel bzw. Halteeinrichtungen, welche zum Befestigen der Blasformträgerschalen 70a und 70b an den jeweiligen Blasformträgerteilen 6a, 6b dienen.

Fig. 5 zeigt eine Teildarstellung der in Fig. 4 gezeigten Vorrichtung, d. h. ein Blasformträgerteil 6a mit dem darin angeordneten Blasträgerschalenteil und dem Blasformteil 4a. Auch erkennt man hier einen Anschluss 120, über das der Blasformträgerschale 70a ein Temperiermedium, beispielsweise eine erwärmte Flüssigkeit, zugeführt werden kann.

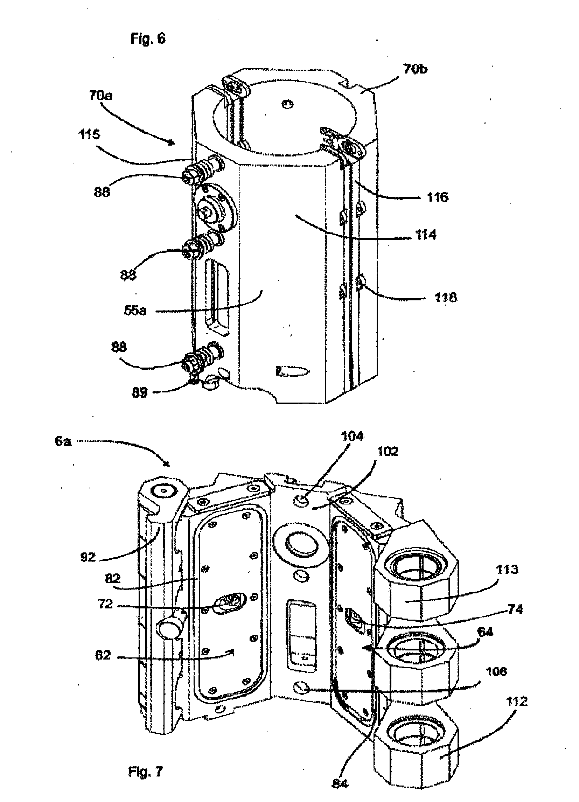

Fig. 6 zeigt eine Darstellung der Blasformträgerschalen 70a, 70b. Man erkennt, das diese hier einen polygonalen Außenumfang aufweisen, d. h. beide Trägerschalenteile 70a und 70b weisen an ihren Außenflächen jeweils vier Kanten auf. Die Bezugszeichen 114 und 115 beziehen sich auf Flächen der Blasformträgerschalen, die im Betrieb von dem (nicht gezeigten) Druckkissen belastet werden. Die entsprechenden durch die Druckkissen aufgebrachten Kräfte wirken hier im Wesentlichen senkrecht zu den beiden Flächen 114 und 115. Die Druckkissen werden daher auch durch die Flächen 114, 115 bzw. Abschnitte dieser Flächen begrenzt. Die Flächen sind hier eben bzw. zweidimensional. Die Dichtungseinrichtungen 82 und 84 liegen an diesen Flächen an.

Das Bezugszeichen 116 bezieht sich auf ein Halteelement, mit dem die Blasformteile (nicht gezeigt) an den Blasformträgerschalen 70a, 70b gehalten werden. Das Bezugszeichen 118 kennzeichnet ein Eingriffsmittel, wie eine Pratze, welche die Blasformteile in einem geschlossenen Zustand hält. Vorteilhaft ist dabei dieses Eingriffsmittel schwenkbar, sodass über diesen Schwenkvorgang die Blasformteile von den Trägerschalen entkoppelt werden können.

Man erkennt hier ebenfalls wieder die Befestigungsmittel 88, mit denen die Blasformträgerschalen an den Blasformträgern angeordnet werden können. Diese Befestigungseinrichtungen sind hier zwischen den beiden Flächen 115 und 114 angeordnet und damit zwischen denjenigen Bereichen, in denen im Betrieb die jeweiligen Teilkräfte F1 und F2 anliegen. An dem zweiten Blasformschalenteil 70b liegt im Betrieb kein Druckkissen an, d. h. das Druckkissen liegt hier nur an einem der beiden Blasformschalenteilen an. Dies ist jedoch auch ausreichend, um die beiden Blasformteile aufeinander zuzudrängen.

Fig. 7 zeigt eine weitere Darstellung eines Blasformträgerteils 6a. Hier erkennt man die Dichtungseinrichtungen 82, 84, welche hier jeweils die beiden Druckkisseneinrichtungen 62, 64 ausbilden bzw. begrenzen. Das Bezugszeichen 102 kennzeichnet wiederum den Bereich der zwischen diesen beiden Druckkissen angeordnet ist und der zum Befestigen der Formträgerschalenteils an dem Blasformträgerteil 6a dient. Die Dichtungseinrichtungen 82, 84 sind hier, wie oben erwähnt, in einem ebenen Bereich angeordnet und damit zweidimensional ausgebildet, was leichter zu bewerkstelligen ist als ein dreidimensionaler Verlauf, der sich beispielsweise an einer gekrümmten Wandung erstreckt.

Die Bezugszeichen 72, 74 kennzeichnen jeweils Zuführeinrichtungen, mittels denen der Bereich, der von der Dichtungseinrichtung 82 umgeben ist, und der damit die Druckkissen 62, 64 ausbildet, mit Druckluft beaufschlagt wird, um so das Blasformträgerschalenteil und das Blasformträgerteil 6a auseinander zu drücken. Die Bezugszeichen 104 und 106 beziehen sich auf Durchgangsöffnungen, durch welche hindurch die Befestigungsmittel 88 führbar sind. Das Bezugszeichen 113 kennzeichnet wiederum eine Aufhängung, an der das Blasformträgerteil 6a angelenkt ist, um auf diese Weise schwenkbar zu sein. Die Befestigungsmittel können Federeinrichtungen 89 aufweisen, welche eine Spannkraft bewirken, welche die Formträgerschale 70a und das Blasformträgerteil 6a zusammenziehen

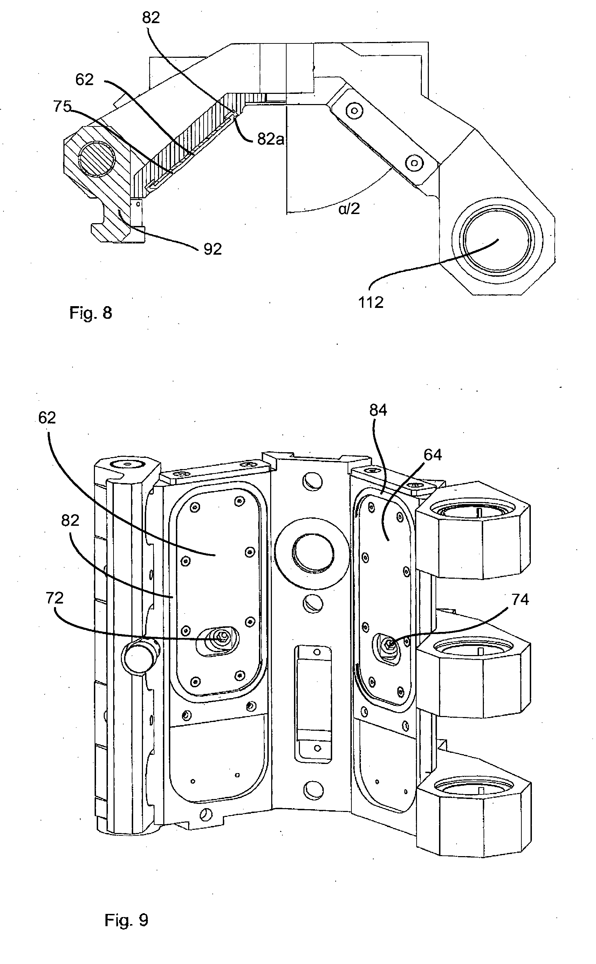

Fig. 8 zeigt eine Draufsicht auf die in Fig. 7 gezeigte Vorrichtung. Das Bezugszeichen 82 kennzeichnet wiederum die Dichtungseinrichtung und das Bezugszeichen 75 eine Halteeinrichtung, durch welche die Dichtungseinrichtung an dem Blasformträgerteil gehalten wird. Bei dieser Halteeinrichtung 75 kann es sich beispielsweise um eine Platte handeln, die durch eine oder mehrere Schrauben an dem Blasformträgerteil 6a angeschraubt ist und welche einen Abschnitt der umlaufenden Dichtungseinrichtung 82 einklemmt. Ein (ebenfalls umlaufender) Abschnitt 82a der Dichtungseinrichtung 82 liegt an der (nicht gezeigten) Blasformträgerschale an. Die Dichtungseinrichtungen sind vorteilhaft aus einem Elastomer hergestellt und verlaufen bevorzugt In einer Ebene.

Das Bezugszeichen α/2 kennzeichnet den Winkel, der zwischen dem rechten Druckkissen und einer Mittelsenkrechten gebildet wird. Der Gesamtwinkel zwischen diesen beiden Druckwinkeln entspricht demnach dem des Winkels α.

Damit wurden hier die Druckkissen in zwei gleiche Teile aufgeteilt und in eine V-förmige Anordnung unter einem optimalen Winkel gebracht. Die oben erwähnte formschlüssige Halterung bzw. die Befestigungsmittel 88 sorgen zudem für eine feste Lage der nun vereinfachten zweidimensionalen Dichtung 82. Genauer gesagt kann diese feste Lage durch die Halteeinrichtung 75, bei der es sich beispielsweise um eine Platte handeln kann, erzeugt werden.

Fig. 9 zeigt eine weitere Ausführungsform der erfindungsgemäßen Vorrichtung. Man erkennt, dass hier der von der Dichtungseinrichtung 82 umgebene Bereich verkleinert ist und damit auch das Druckkissen 62 verkleinert ist. Damit wurde hier die Druckkissenfläche durch den Wechsel der Dichtungseinrichtung 82 verändert und auf diese Weise ist es möglich, die Lage der Krafteinwirkung auf die Blasformträgerschalen und auch die Größe der Kraft gezielt zu steuern. Falls gewünscht, könnten durch die jeweiligen Druckkisseneinrichtungen 62 auch Stege verlaufen, um die Kräfte noch weiter aufzuspalten.

### Bezugszeichenliste

- 1: Umformungsvorrichtung
- 2: Transportrad, Transporteinrichtung
- 4: Blasform
- 4a, b: Blasformteile
- 5: Reckstange
- 6: Blasformträger
- 6a, b: Blasformträgerteile
- 8: Umformungsstationen, Blasstationen
- 9: Führungskurve
- 10: Kunststoffvorformlinge
- 10a: Behältnisse
- 11: Folgeeinrichtung, Abschnitt
- 12: Schlitten
- 13: Boden
- 17: Deckel
- 18: Wandung
- 19: bewegliche Seitenwand
- 20: Reinraum
- 21: Halterung
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 55: Sterilisationseinrichtung
- 62, 64: Druckkisseneinrichtungen
- 70a, b: Blasformträgerschalenteile
- 72, 74: Zuführungseinrichtungen
- 75: Halteeinrichtung
- 82, 84: Dichtungseinrichtungen
- 82a: Dichtungsabschnitt
- 88: Halteeinrichtung, Befestigungsmittel
- 89: Federeinrichtungen
- 92: Verriegelungselement
- 94: Verriegelungselement
- 102: Bereich zwischen den Druckkissen
- 105: Schwenkwelle
- 104, 106: Durchgangsöffnungen
- 112: Schwenkachse
- 113: Aufhängung
- 114, 115: Flächen der Blasformträgerschalen
- 116: Halteelement
- 118: Eingriffsmittel
- 120: Anschluss
- 182a, b: Dichtungseinrichtung (StdT)
- B1, B2: Bereiche
- F1, F2: Teilkräfte
- Fres: Kraft
- L: Linie
- U: unsterile Umgebung
- UR: Umfangsrichtung
- X: Achse
- Y: Richtung
- α: Winkel

## Patentansprüche

1. Vorrichtung (1) zum Umformen von Kunststoffvorformlingen (10) zu Kunststoffbehältnissen mit einer Blasform (4), welche wenigstens zwei bezüglich einander beweglich angeordnete Blasformteile (4a, 4b) aufweist, welche in einem geschlossenen Zustand der Blasform (4) einen Hohlraum ausbilden, in dessen Inneren die Kunststoffvorformlinge durch Beaufschlagung mit einem fließfähigen Medium zu den Kunststoffbehältnissen expandierbar sind, wobei das erste Blasformteil (4a) an einem ersten Blasformträgerteil (6a) angeordnet ist und das zweite Blasformteil (4b) an einem zweiten Blasformträgerteil (6b) angeordnet ist und das erste Blasformträgerteil (6a) gegenüber dem zweiten Blasformträgerteil (6b) zum Öffnen und Schließen der Blasform (4) bewegbar ist, und wobei zwischen wenigstens einem Blasformträgerteil (6a) und dem an diesem Blasformträgerteil (6a) angeordneten Blasformteil (4a) eine Druckkissenanordnung angeordnet ist, wobei ein Druckkissen (62, 64) dieser Druckkissenanordnung mit einem fließfähigen Druckmittel beaufschlagbar ist, um durch eine zwischen dem Blasformträgerteil und dem Blasformteil (4a) wirkende Kraft das wenigstens eine Blasformträgerteil (6a) und das an diesem angeordnete Blasformteil (4a) auseinanderzudrängen,
**dadurch gekennzeichnet, dass**
die Druckkissenanordnung derart ausgebildet ist, dass die zwischen dem Blasformträgerteil (6a) und dem Blasformteil (4a) wirkende Kraft eine erste Teilkraft (F1) aufweist, die in einem ersten vorgegebenen Bereich (B1) in der Umfangsrichtung des Blasformteils (4a) wirkt sowie eine zweite Teilkraft (F2), die in einem zweiten vorgegebenen Bereich (B1) in der Umfangsrichtung des Blasformteils (4a) wirkt, wobei der erste Bereich (B1) und der zweite Bereich (B2) voneinander beabstandet sind und die Richtungen der ersten Teilkraft (F1) und der zweiten Teilkraft (F2) in einem von 0° unterschiedlichen Winkel zueinander verlaufen.

2. Vorrichtung nach Anspruch 1
**dadurch gekennzeichnet, dass**
der Winkel zwischen der Richtung der ersten Teilkraft (F1) und der Richtung der zweiten Teilkraft (F2) zwischen 10° und 170°, bevorzugt zwischen 20° und 160°, bevorzugt zwischen 30° und 150°, bevorzugt zwischen 45° und 135°, bevorzugt zwischen 60° und 120° und besonders bevorzugt zwischen 75° und 105° liegt.

3. Vorrichtung (1) nach wenigstens einem der vorangegangenen Ansprüchen,
**dadurch gekennzeichnet, dass**
die Druckkissenanordnung eine erste Druckkisseneinrichtung (62) und eine zweite Druckkisseneinrichtung (64) aufweist, welche wenigstens teilweise und bevorzugt vollständig voneinander getrennt sind.

4. Vorrichtung (1) nach Anspruch 3,
**dadurch gekennzeichnet, dass**
die Vorrichtung (1) eine erste Zuführungseinrichtung (72) aufweist, um der ersten Druckkisseneinrichtung (62) das fließfähige Medium zuzuführen sowie eine hiervon getrennte zweite Zuführungseinrichtung (74), um der zweiten Druckkisseneinrichtung (64) das fließfähige Medium zuzuführen.

5. Vorrichtung nach wenigstens einem der vorangegangenen Ansprüche,
**dadurch gekennzeichnet, dass**
die Druckkissenanordnung eine umlaufende Dichtungseinrichtung (82, 84) aufweist, welche den mit dem fließfähigen Druckmittel beaufschlagten Raum abgrenzt und diese Dichtungseinrichtung (82, 84) an einem ebenen Wandungsbereich anliegt.

6. Vorrichtung nach wenigstens einem der vorangegangenen Ansprüche,
**dadurch gekennzeichnet, dass**
die Druckkissenanordnung zwischen dem Blasformträgerteil (6a) und einer das Blasformteil (4a) haltenden Trägerschale (70a) angeordnet ist.

7. Vorrichtung nach wenigstens einem der vorangegangenen Ansprüche,
**dadurch gekennzeichnet, dass**
die Vorrichtung eine Halteeinrichtung (88) zum Halten der Trägerschale (70a) oder des Blasformteils (4a) an dem Blasformträgerteil (6a) aufweist und diese Halteeinrichtung (88) in einer Umfangsrichtung der Blasform (4a) zwischen Bereichen der Druckkissenanordnung angeordnet ist.

8. Vorrichtung nach Anspruch 3 und 6,
**dadurch gekennzeichnet, dass**
die Halteeinrichtung (88) zwischen der ersten Druckkisseneinrichtung (62) und der zweiten Druckkisseneinrichtung (64) angeordnet ist.

9. Vorrichtung nach wenigstens einem der vorangegangenen Ansprüche.
**dadurch gekennzeichnet, dass**
wenigstens ein Blasformträgerteil (6a, 6b) an einer dem ihm zugeordneten Blasformteil (4a, 4b) zugewandten Seite eine V-förmige Ausgestaltung aufweist.

10. Verfahren zum Umformen von Kunststoffvorformlingen (10) zu Kunststoffbehältnissen mit einer Blasform (4), welche wenigstens zwei bezüglich einander beweglich angeordnete Blasformtelle (4a, 4b) aufweist, welche In einem geschlossenen Zustand der Blasform (4) einen Hohlraum ausbilden, in dessen Inneren die Kunststoffvorformlinge durch Beaufschlagung mit einem fließfähigen Medium zu den Kunststoffbehältnissen expandiert werden, wobei das erste Blasformteil (4a) an einem ersten Blasformträgerteil (6a) angeordnet ist und das zweite Blasformteil (4b) an einem zweiten Blasformträgerteil (6b) angeordnet ist und das erste Blasformträgerteil (6a) gegenüber dem zweiten Blasformträgerteil (6b) zum Öffnen und Schließen der Blasform (4) bewegt wird, und wobei zwischen wenigstens einem Blasformträgerteil (6a) und dem an diesem Blasformträgerteil (6a) angeordneten Blasformteil (4a) eine Druckkissenanordnung angeordnet ist, wobei eine Druckkisseneinrichtung (62) dieser Druckkissenanordnung mit einem fließfähigen Druckmittel beaufschlagt wird,
um durch eine zwischen dem Blasformträgerteil (6a) und dem Blasformteil (4a) wirkende Kraft (F1) das wenigstens eine Blasformträgerteil (6a) und das an diesem angeordnete Blasformteil (4a) auseinanderzudrängen,
**dadurch gekennzeichnet, dass**
die Druckkissenanordnung derart ausgebildet ist, dass die zwischen dem Blasformträgerteil (6a) und dem Blasformteil (4a) wirkende Kraft eine erste Teilkraft (F1) aufweist, die in einem ersten vorgegebenen Bereich (B1) in der Umfangsrichtung des Blasformteils (4a) wirkt sowie eine zweite Teilkraft (F2), die in einem zweiten vorgegebenen Bereich (B1) in der Umfangsrichtung des Blasformteils (4a) wirkt, wobei der erste Bereich (B1) und der zweite Bereich (B2) voneinander beabstandet sind und die Richtungen der ersten Teilkraft (F1) und der zweiten Teilkraft (F2) in einem von 0° unterschiedlichen Winkel zueinander verlaufen.

11. Verfahren nach Anspruch 10,
**dadurch gekennzeichnet, dass**
eine zwischen dem Blasformteil (4a) und dem Blasformträgerteil (6a) wirkende Haltekraft in der Umfangsrichtung der Blasform (4) zwischen der ersten Teilkraft (F1) und der zweiten Teilkraft (F2) wirkt.

## Claims

1. An apparatus (1) for shaping plastics material pre-forms (10) into plastics material containers with a blow mould (4) which has at least two blow mould parts (4a, 4b) which are arranged so as to be movable with respect to each other and which in a closed state of the blow mould (4) form a cavity, in the interior of which the plastics material pre-forms are capable of being expanded to form the plastics material containers by being acted upon with a flowable medium, wherein the first blow mould part (4a) is arranged on a first blow mould carrier part (6a) and the second blow mould part (4b) is arranged on a second blow mould carrier part (6b) and the first blow mould carrier part (6a) is movable with respect to the second blow mould carrier part (6b) in order to open and close the blow mould (4), and wherein a pressure pad arrangement is arranged between at least one blow mould carrier part (6a) and the blow mould part (4a) arranged on this blow mould carrier part (6a), wherein a pressure pad (62, 64) of this pressure pad arrangement is capable of being acted upon with a flowable pressure medium, in order to force apart from each other the at least one blow mould carrier part (6a) and the blow mould part (4a) arranged on latter by a force acting between the blow mould carrier part and the blow mould part (4a), **characterized in that** the pressure pad arrangement is designed in such a way that the force acting between the blow mould carrier part (6a) and the blow mould part (4a) has a first force component (F1) which acts in a first pre-set region (B1) in the peripheral direction of the blow mould part (4a) and a second force component (F2) which acts in a second pre-set region (B1) in the peripheral direction of the blow mould part (4a), wherein the first region (B1) and the second region (B2) are arranged at a distance from each other and the directions of the first force component (F1) and the second force component (F2) extend at an angle different from 0° with respect to each other.

2. An apparatus according to claim 1, **characterized in that** the angle between the direction of the first force component (F1) and the direction of the second force component (F2) is between 10° and 170°, preferably between 20° and 160°, preferably between 30° and 150°, preferably between 45° and 135°, preferably between 60° and 120°, and in a particularly preferred manner between 75° and 105°.

3. An apparatus (1) according to at least one of the preceding claims, **characterized in that** the pressure pad arrangement has a first pressure pad device (62) and a second pressure pad device (64) which are separated from each other at least in part and preferably completely.

4. An apparatus (1) according to claim 3, **characterized in that** the apparatus (1) has a first supply device (72), in order to supply the flowable medium to the first pressure pad device (62), and a second supply device (74) separate from it, in order to supply the flowable medium to the second pressure pad device (64).

5. An apparatus according to at least one of the preceding claims, **characterized in that** the pressure pad arrangement (60) has a surrounding sealing device (82, 84) which demarcates the space acted upon with the flowable pressure medium and this sealing device (82, 84) abuts against a flat wall area.

6. An apparatus according to at least one of the preceding claims, **characterized in that** the pressure pad arrangement (60) is arranged between the blow mould carrier part (6a) and a carrier shell (70a) holding the blow mould part (4a).

7. An apparatus according to at least one of the preceding claims, **characterized in that** the apparatus has a holding device (88) for holding the carrier shell (70a) or the blow mould part (4a) on the blow mould carrier part (6a), and this holding device (88) is arranged in a peripheral direction of the blow mould (4a) between regions of the pressure pad arrangement (60).

8. An apparatus according to claims 3 and 6, **characterized in that** the holding device (88) is arranged between the first pressure pad device (62) and the second pressure pad device (64).

9. An apparatus according to at least one of the preceding claims, **characterized in that** at least one blow mould carrier part comprises at a side facing towards the blow mould part (4a, 4b) a V-shaped design.

10. A method of shaping plastics material pre-forms (10) into plastics material containers, with a blow mould (4) which has at least two blow mould parts (4a, 4b) which are arranged so as to be movable with respect to each other and which in a closed state of the blow mould (4) form a cavity, in the interior of which the plastics material pre-forms are expanded to form the plastics material containers by being acted upon with a flowable medium, wherein the first blow mould part (4a) is arranged on a first blow mould carrier part (6a) and the second blow mould part (4b) is arranged on a second blow mould carrier part (6b), and the first blow mould carrier part (6a) is moved with respect to the second blow mould carrier part (6b) in order to open and close the blow mould (4), and wherein a pressure pad arrangement is arranged between at least one blow mould carrier part (6a) and the blow mould part (4a) arranged on this blow mould carrier part (6a), wherein a pressure pad device (62) of this pressure pad arrangement) is acted upon with a flowable pressure medium in order to move apart the at least one blow mould carrier part (6a) and the blow mould part (4a) arranged on the latter by a force (F1) acting between the blow mould carrier part (6a) and the blow mould part (4a), **characterized in that** the pressure pad arrangement (60) is designed in such a way that the force acting between the blow mould carrier part (6a) and the blow mould part (4a) has a first force component (F1), which acts in a first pre-set region (B1) in the peripheral direction of the blow mould part (4a), and a second force component (F2), which acts in a second pre-set region (B1) in the peripheral direction of the blow mould part (4a), wherein the first region (B1) and the second region (B2) are arranged at a distance from each other and the directions of the first force component (F1) and the second force component (F2) extend at an angle different from 0° with respect to each other.

11. A method according to claim 10, **characterized in that** a holding force acting between the blow mould part (4a) and the blow mould carrier part (6a) acts in the peripheral direction of the blow mould (4) between the first force component (F1) and the second force component (F2).

## Revendications

1. Installation (1) pour la transformation de préformes en matière plastique (10) en récipients en matière plastique, avec un moule de soufflage (4) comprenant moins deux éléments (4a, 4b) de moule de soufflage disposés de manière à pouvoir être déplacés l'un par rapport à l'autre et formant une cavité dans un état de fermeture du moule de soufflage (4), à l'intérieur de laquelle les préformes en matière plastique sont expansibles pour former les récipients en matière plastique en étant soumis à un fluide, le premier élément (4a) de moule de soufflage étant disposé sur un premier élément (6a) de support de moule de soufflage et le deuxième élément (4b) de moule de soufflage sur un deuxième élément (6b) de support de moule de soufflage, le premier élément (6a) de support de moule de soufflage étant déplaçable par rapport au deuxième élément (6b) de support de moule de soufflage pour ouvrir et fermer le moule de soufflage (4), et un système de coussin de pression étant disposé entre au moins un élément (6a) de support de moule de soufflage et l'élément (4a) de moule de soufflage disposé sur ledit élément (6a) de support de moule de soufflage, un coussin de pression (62, 64) dudit système de coussin de pression pouvant être soumis à un fluide sous pression pour écarter l'un de l'autre l'élément ou les éléments (6a) de support de moule de soufflage et l'élément (4a) de moule de soufflage disposé sur celui-ci au moyen d'une force s'exerçant entre l'élément de support de moule de soufflage et l'élément (4a) de moule de soufflage,
**caractérisée en ce que**
le système de coussin de pression est réalisé de telle manière que la force s'exerçant entre l'élément (6a) de support de moule de soufflage et l'élément (4a) de moule de soufflage comprend une première force partielle (F1) agissant dans une première zone (B1) définie dans la direction périphérique de l'élément (4a) de moule de soufflage, ainsi qu'une deuxième force partielle (F2) agissant dans une deuxième zone (B1) définie dans la direction périphérique de l'élément (4a) de moule de soufflage, la première zone (B1) et la deuxième zone (B2) étant espacées l'une de l'autre, et les directions de la première force partielle (F1) et de la deuxième force partielle (F2) formant entre elles un angle différent de 0°.

2. Installation selon la revendication 1,
**caractérisée en ce que**
l'angle entre la direction de la première force partielle (F1) et la direction de la deuxième force partielle (F2) est compris entre 10° et 170°, préférentiellement entre 20° et 160°, préférentiellement entre 30° et 150°, préférentiellement entre 45° et 135°, préférentiellement entre 60° et 120°, et tout particulièrement entre 75° et 105°.

3. Installation (1) selon au moins une des revendications précédentes,
**caractérisée en ce que**
le système de coussin de pression comprend un premier dispositif de coussin de pression (62) et un deuxième dispositif de coussin de pression (64), lesquels sont au moins partiellement et de préférence totalement séparés l'un de l'autre.

4. Installation (1) selon la revendication 3,
**caractérisée en ce que**
ladite installation (1) comprend un premier dispositif d'alimentation (72) destiné à alimenter en fluide le premier dispositif de coussin de pression (62), ainsi qu'un deuxième dispositif d'alimentation (74) séparé du premier et destiné à alimenter en fluide le deuxième dispositif de coussin de pression (64).

5. Installation selon au moins une des revendications précédentes,
**caractérisée en ce que**
le système de coussin de pression comprend un dispositif de joint d'étanchéité (82, 84) qui délimite l'espace soumis au fluide sous pression, et **en ce que** ledit dispositif de joint d'étanchéité (82, 84) est appliqué contre une zone de paroi plane.

6. Installation selon au moins une des revendications précédentes,
**caractérisée en ce que**
le système de coussin de pression est disposé entre l'élément (6a) de support de moule de soufflage et une coque de support (70a) maintenant l'élément (4a) de moule de soufflage.

7. Installation selon au moins une des revendications précédentes,
**caractérisée en ce que**
ladite installation comprend un dispositif de maintien (88) destiné à maintenir la coque de support (70a) ou l'élément (4a) de moule de soufflage sur l'élément (6a) de support de moule de soufflage, et **en ce que** ledit dispositif de maintien (88) est disposé entre des zones du système de coussin de pression dans la direction périphérique du moule de soufflage (4a).

8. Installation selon les revendications 3 et 6,
**caractérisée en ce que**
le dispositif de maintien (88) est disposé entre le premier dispositif de coussin de pression (62) et le deuxième dispositif de coussin de pression (64).

9. Installation selon au moins une des revendications précédentes,
**caractérisée en ce**
**qu'**au moins un élément (6a, 6b) de support de moule de soufflage présente une forme en V sur un côté opposé à l'élément de moule de soufflage (4a, 4b) qui lui est affecté.

10. Procédé de transformation de préformes en matière plastique (10) en récipients en matière plastique, avec un moule de soufflage (4), comprenant moins deux éléments (4a, 4b) de moule de soufflage disposés de manière à pouvoir être déplacés l'un par rapport à l'autre et formant une cavité dans un état de fermeture du moule de soufflage (4), à l'intérieur de laquelle les préformes en matière plastique sont expansés pour former les récipients en matière plastique en étant soumis à un fluide, le premier élément (4a) de moule de soufflage étant disposé sur un premier élément (6a) de support de moule de soufflage et le deuxième élément (4b) de moule de soufflage sur un deuxième élément (6b) de support de moule de soufflage, le premier élément (6a) de support de moule de soufflage étant déplacé par rapport au deuxième élément (6b) de support de moule de soufflage pour ouvrir et fermer le moule de soufflage (4), et un système de coussin de pression étant disposé entre au moins un élément (6a) de support de moule de soufflage et l'élément (4a) de moule de soufflage disposé sur ledit élément (6a) de support de moule de soufflage, un dispositif de coussin de pression (62) dudit système de coussin de pression étant soumis à un fluide sous pression pour écarter l'un de l'autre l'élément ou les éléments (6a) de support de moule de soufflage et l'élément (4a) de moule de soufflage disposé sur celui-ci au moyen d'une force (F1) s'exerçant entre l'élément (6a) de support de moule de soufflage et l'élément (4a) de moule de soufflage,
**caractérisé en ce que**
le système de coussin de pression est réalisé de telle manière que la force s'exerçant entre l'élément (6a) de support de moule de soufflage et l'élément (4a) de moule de soufflage comprend une première force partielle (F1) agissant dans une première zone (B1) définie dans la direction périphérique de l'élément (4a) de moule de soufflage, ainsi qu'une deuxième force partielle (F2) agissant dans une deuxième zone (B1) définie dans la direction périphérique de l'élément (4a) de moule de soufflage, la première zone (B1) et la deuxième zone (B2) étant espacées l'une de l'autre, et les directions de la première force partielle (F1) et de la deuxième force partielle (F2) formant entre elles un angle différent de 0°.

11. Procédé selon la revendication 10,
**caractérisé en ce**
**qu'**une force de maintien s'exerçant entre l'élément (4a) de moule de soufflage et l'élément (6a) de support de moule de soufflage est active entre la première force partielle (F1) et la deuxième force partielle (F2) dans la direction périphérique du moule de soufflage (4).
